# EUROPÄISCHE PATENTSCHRIFT

(11) **EP 0 952 911 B1**
(45) Veröffentlichungstag und Bekanntmachung des Hinweises auf die Patenterteilung: **09.08.2000**
(21) Anmeldenummer: 98905224.6
(22) Anmeldetag: 03.01.1998
(51) Int. Cl.: B29C 45/17, B29C 45/14, B01D 46/24

(54) **VERFAHREN ZUR HERSTELLUNG EINES VERBUNDKÖRPERS**
METHOD FOR PRODUCING A COMPOSITE BODY
PROCEDE DE PRODUCTION D'UN CORPS COMPOSITE

(30) Priorität: 18.01.1997 DE 19701672
(43) Veröffentlichungstag der Anmeldung: 03.11.1999
(73) Patentinhaber: MAHLE Filtersysteme GmbH, 70376 Stuttgart (DE)
(72) Erfinder: GEBERT, Hans, D-74080 Heilbronn (DE); LENZEN, Ditrich, D-74343 Sachsenheim (DE); POGORIUTSCHNIG, Hartwig, A-9170 Ferlach (AT)
(74) Vertreter: Patentanwalts-Partnerschaft Rotermund + Pfusch
(86) Internationale Anmeldenummer: DE9800049
(87) Internationale Veröffentlichungsnummer: WO9831525

(56) Entgegenhaltungen:
- EP-A- 0 714 688
- WO-A-90/06220
- DE-A- 4 038 172
- DE-B- 1 062 675
- PATENT ABSTRACTS OF JAPAN vol. 14, no. 86 (C-0690), 19.Februar 1990 & JP 01 299616 A (TOYODA GOSEI CO LTD), 4.Dezember 1989,

## Beschreibung

Die Erfindung betrifft ein Verfahren zur Herstellung eines aus einem ersten und einem zweiten Material bestehenden Verbundkörpers nach dem Oberbegriff des Patentanspruchs 1.

Aus EP 0 400 135 B1 ist ein Spritzgußverfahren bekannt, bei dem Teile der Oberfläche des herzustellenden Spritzgußteiles ausschließlich durch in dem Formwerkzeug unter Druck stehendes Gas geformt werden.

Bekannt sind auch sogenannte Gasinnendruckverfahren, durch die hohle Kunststoffspritzgußteile ohne verlorene Form rationell herstellbar sind. Bei den bekannten Gasinnendruckverfahren wird in bestimmten Abläufen flüssiges Spritzgußmaterial in die Gießform eingebracht und Gas mit hohem Druck in dieses flüssige Gut hineingepreßt. Das eingepreßte Gas bildet den gewünschten Hohlkörper unter Vergleichmäßigung der Wandstärke dieses Gutes. Ein Anwendungsbeispiel für ein Spritzgußteil nach dem vorgenannten Verfahren zeigt EP 0 726 389 A1 auf dem Gebiet der Herstellung von Filtergehäusen.

Die Erfindung beschäftigt sich mit dem Problem, an einen bereits vorhandenen festen Körper ein aus einer Schmelze herstellbares Teil auf eine möglichst rationelle Weise anzuformen. Dabei soll der vorhandene feste Körper insbesondere aus porösem Material bestehen können. Auch soll das anzuformende Teil gegenüber dem vorhandenen festen Körper kontaktfreie Bereiche aufweisen können. Beispiele für Gegenstände, die gemäß dem erfindungsgemäßen Problem rationell hergestellt werden sollen, sind aus EP 0 714 688 A1 und DE-AS-1 062 675 bekannt.

Eine erfindungsgemäße Lösung für das vorstehend genannte Problem zeigt ein Verfahren mit sämtlichen Merkmalen des Patentanspruchs 1 auf, wobei die gattungsmäßigen Merkmale aus dem Herstellungsverfahren des Gegenstandes nach EP 0 714 688 A1 abgeleitet sind.

Dieses Verfahren baut auf dem Prinzip des Spritzgußverfahrens nach dem bereits oben erwähnten Dokument EP 0 400 135 B1 auf. Das Neue der Erfindung gegenüber jenem bekannten Verfahren besteht darin, in demjenigen Bereich des Spritzgußteiles, der allein von dort unter Druck anstehendem Gas geformt wird, einen Festkörper anzuformen. Dieser Festkörper kann dabei insbesondere aus porösem Material bestehen. Aufgrund der Porosität dieses Festkörpermaterials, das mit der Schmelze verbunden werden soll, steht die Schmelze auch in dem an den porösen Festkörper angrenzenden Bereich über die Poren mit dem druckbeaufschlagten Gas in Verbindung. Dadurch kann die Eindringtiefe der Schmelze in den porösen Festkörper durch die Art, wie die Schmelze und das Gas in zeitlicher Abstimmung zueinander eingebracht werden, definiert vorbestimmt werden. Außer der zeitlichen Zuordnung zwischen dem Einbringen der Schmelze und dem Gas ist der Druck, unter dem die Schmelze und das Gas in der zeitlich abgestimmten Zuordnung eingeführt werden, von Bedeutung. Die richtige Abstimmung der vorgenannten Verfahrensparameter kann von Fall zu Fall ohne weiteres auf einfache Weise experimentell ermittelt werden.

Für die Durchführung der Erfindung kommen nur solche Spritzgußverfahren in Frage, bei denen innerhalb der Spritzgußform Bereiche des durch Spritzguß herzustellenden und mit dem Festkörper zu verbindenden Materials ausschließlich von in die Spritzgußform eingebrachtem Druckgas geformt werden.

Aus DE 4 038 172 A1 ist es bekannt, den aus porösem Material bestehenden Schnittkantenbereich einer Platte im Spritzgußverfahren mit einem Kunststoff-Kantenbelag zu versehen. Wenn die Kunststoffschmelze unterschiedlich tief in die Poren des Kantenbereiches eindringt, kann es zu einer unebenen Außenoberfläche des Kantenbelages kommen. Um dies zu vermeiden, wird in das Innere des aufgespritzten Kantenbelages noch im schmelzflüssigen Zustand Druckgas eingespritzt. Das eingespritzte Druckgas erzeugt einen längs des Kantenbelages umlaufenden Hohlraum, der für eine glatte Außenoberfläche des Kantenbelages sorgt.

Nach der Erfindung kann der feste Körper insbesondere das Filtermaterial eines Ringfilterelementes sein, das insbesondere in der Form eines Filtersternes vorliegen kann, wie das bei dem Filter nach EP 0 714 688 A1 beispielsweise der Fall ist. Das anzuformende Spritzgußmaterial bildet bei einem Filterstern die übliche Endscheibe. Das Spritzgußmaterial ist bei einer solchen herzustellenden Endscheibe für ein Ringfilterelement in der Regel Kunststoff. Aus dem Spritzgußmaterial können beim Anformen mindestens einer der Endscheiben zumindest Teilbereiche des Filtergehäuses als integriertes Teil mit angeformt werden. Das angeformte Filtergehäuse kann bis auf eine Zu- und Abströmöffnung praktisch geschlossen ausgebildet werden.

In die Spritzgußform kann in demjenigen Bereich, in dem das Spritzgußteil gasdruckgeformt werden soll, eine Folie eingelegt sein, auf die der Gasdruck einwirkt. Beim Ablauf des Spritzgußprogrammes wird die Folie an das Spritzgußteil angeformt und mit diesem verschmolzen, wenn miteinander verschmelzbare Materialien verwendet werden.

Zweckmäßige Verfahrensausgestaltungen sind Gegenstand der Unteransprüche.

Die erfindungsgemäß herzustellenden Spritzgußteile können als solche, d.h. bezüglich der Bereiche aus dem zweiten Material in dem an sich bekannten Gasinnendruckspritzgießverfahren hohl herstellbare Körper sein.

Filter mit einem im Spritzgußverfahren hergestellten Gehäuse sind aus JP 01 29 96 16 A bekannt. Die durch die Erfindung gegebenen Möglichkeiten zur rationellen Fertigung eines Verbundkörpers lassen sich jenem Dokument allerdings nicht entnehmen.

Ausführungsbeispiele der Erfindung sind in der Zeichnung schematisch dargestellt.

Es zeigen
- Fig. 1: einen Schnitt durch ein offenes Spritzgießwerkzeug mit zwei getrennt eingelegten Ringfiltersternen,
- Fig. 2: eine Draufsicht auf das Unterteil des Spritzgieß-werkzeuges nach Linie II-II in Fig. 1,
- Fig. 3: einen Längsschnitt durch einen Ringfilterstern mit einer in dem Spritzgießwerkzeug nach Fig. 1 einseitig angeformten Endscheibe,
- Fig. 4: einen Schnitt durch ein offenes Spritzgießwerkzeug mit einem um einen Ringfilterstern angeformten geschlossenen Filtergehäuse,
- Fig. 5: einen Schnitt durch ein offenes Spritzgießwerkzeug mit zwei getrennt eingelegten von jeweils einer Folie eingeschlossenen Ringfiltersternen,
- Fig. 6: einen Längsschnitt durch ein folienüberzogenen Ringfilterstern mit einer in dem Spritzgießwerkzeug nach Fig. 4 angeformten Endscheibe.

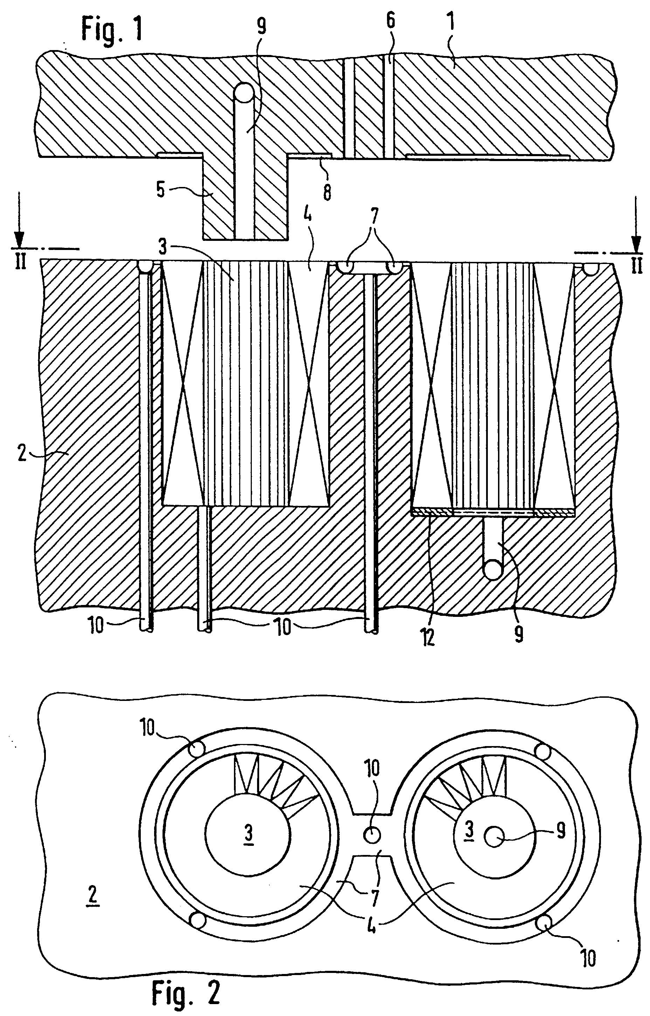

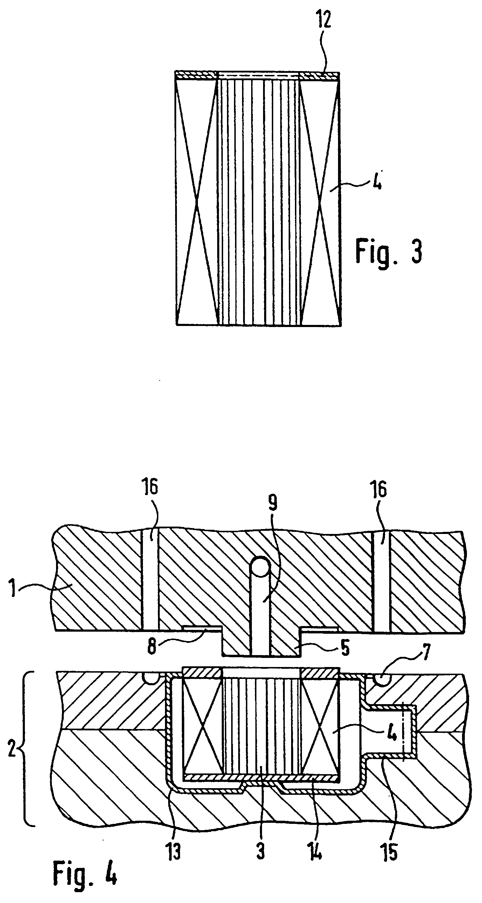

Fig. 1 und 2 zeigen eine erfindungsgemäße Einrichtung mit einem Werkzeugoberteil 1 und einem Unterteil 2. Im Unterteil 2 befindet sich eine Aufnahme 3 für ein Ringfilter in der Form eines Filtersternes 4. Ein Dorn 5 im Oberteil 1 dient der Herstellung einer Öffnung im Zentrum einer an die Stirnringseite des Filtersternes 4 in dem Werkzeug anzuspritzenden Endscheibe. Nach Einsetzen des Filtersternes 4 in die Aufnahme 3 wird das Oberteil in bekannter Weise gegen das Unterteil 2 fest angedrückt. Durch eine Ringdüse 6 wird nun flüssiger Kunststoff in einen Ringangußkanal 7 gespritzt, von wo aus der Kunststoff in den die äußere Form der zukünftigen Endscheibe bildenden Raum 8 gelangt. Die eine Begrenzung dieses Raumes 8 wird durch den Filterstern 4 gebildet. Unmittelbar nach dem Einspritzvorgang wird durch die Düse 9 ein inertes Gas, das beispielsweise Stickstoff sein kann, in den Raum 3 mit hohem Druck eingebracht. Dieser Druck entspricht etwa dem Nachdruck nach dem Einspritzvorgang, das heißt beispielsweise 80 bar. Das Gas vergleichmäßigt dabei die Dicke der zu erzeugenden Endscheibe, wobei gleichzeitig die vorgegebenen äußeren Konturen der Endscheibe ausgebildet werden. Nach Verfestigung des Kunststoffes können nun der Filterstern 4 mit einer ersten Endscheibe 12 (Fig. 3) und einen Angußring 7 mittels Auswerfern 10 herausgenommen werden. Im gleichen Werkzeug kann in einer zweiten Aufnahme die zweite Endscheibe (nicht dargestellt) nach diesem Gasinnendruck-Verfahren hergestellt werden. Die zweite Endscheibe kann eine geschlossene oder eine Ringendscheibe sein. Beide Endscheiben können alternativ auch gleichzeitig innerhalb eines gleichen Formhohlraumes eines Spritzgießwerkzeuges hergestellt werden, indem für die zweite Endscheibe beispielsweise zusätzliche Einspritzdüsen vorgesehen werden.

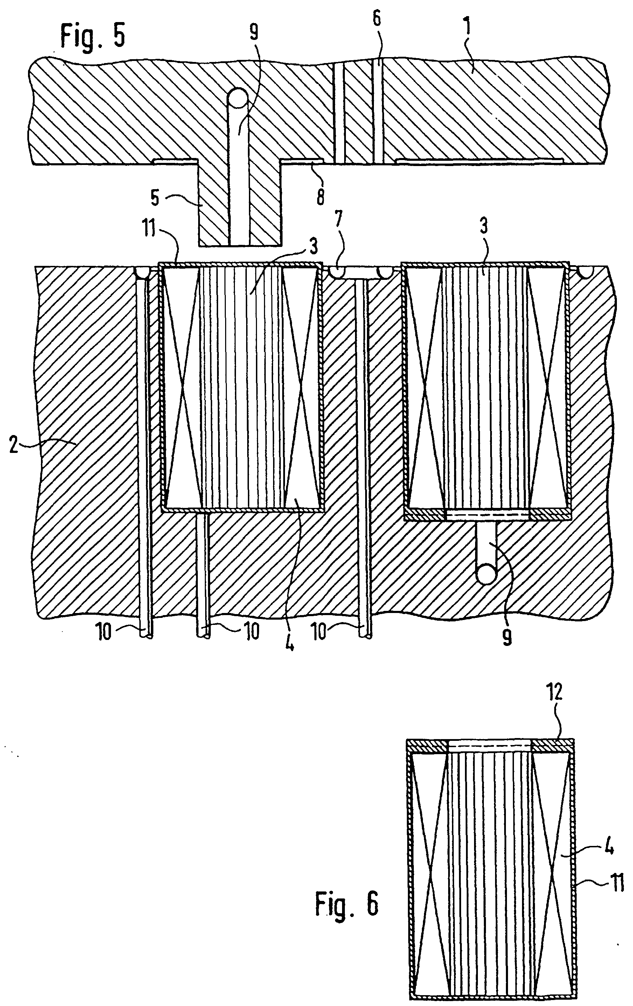

Fig. 4 zeigt ein Spritzgießwerkzeug, in dem in einem Verfahren, wie es bei der Einrichtung nach Fig. 1 und 2 beschrieben ist, zusammen mit einer angespritzten Endscheibe gleichzeitig ein den Filterstern 4 einschließendes Filtergehäuse 13 angeformt wird. Diese direkt in das Filtergehäuse 13 integrierte Endscheibe besitzt eine zentrale Öffnung, die als Zu- oder Abströmöffnung des Filtergehäuses 13 dienen kann. Die zweite, den Filterstern 4 axial verschließende Endscheibe 14 ist zuvor in einer Art hergestellt worden wie die erste Endscheibe 12. Selbstverständlich ist es auch möglich, mit der Einrichtung nach Fig. 4 beide Endscheiben gleichzeitig und integriert in das Filtergehäuse 13 herzustellen. Zur Ausbildung einer zweiten Zu- bzw. Abströmöffnung des Filtergehäuses 13 ist eine axial zunächst geschlossener Stutzen 15 angeformt. Der stirnseitige Verschluß dieses Stutzens 15 wird nach der Herausnahme des Filtergehäuses 13 aus der Spritzgießform abgetrennt. Außer den gezeichneten Einspritzdüsen 16 können noch weitere, insbesondere in dem Formunterteil, vorgesehen sein. Erforderliche Auswerfer für ein Herausnehmen des Filtergehäuses 13 aus der Form sind - ohne gezeichnet zu sein - in üblicher Form vorhanden.

In Fig. 5 ist der Filterstern 4 von einer Folie 11 umhüllt. Diese Folie besteht aus einem mit dem die Endscheiben bildenden Spritzgußmaterial verschmelzbaren Kunststoffmaterial. In dem Stirnbereich des Filtersternes 4, in dem die Filterscheibe angespritzt werden soll, dient die Folie 11 dazu, daß das eingespritzte Kunststoffmaterial beim Einspritzen möglichst noch nicht in die Faltenzwischenräume des Filtersternes eindringen kann. Das auf der zylindrischen Außenfläche des Filtersternes 4 befindliche Folienmaterial dient als Verpackungsmaterial für den Filterstern, bevor dieser in ein Filtergehäuse eingebaut wird. Das auf der zylindrischen Außenfläche verbleibende Folienmaterial braucht dann lediglich vor dem Einsatz des Filtersternes in ein Filtergehäuse abgerissen zu werden. Auf diese Weise wird eine rationell herstellbare Verpackung für das Filterelement erreicht.

Bei dem dargestellten Beispiel wird im Zentrum des Filtersternes 4 beim Schließen des Spritzgießwerkzeuges die Folie 11 durch den Dorn 5 aufgerissen.

Anstelle einer Umhüllung des Filtersternes 4 mit der vorgenannten Folie 11 kann auch lediglich eine Folie in der Form einer Ringscheibe auf die mit einer Endscheibe zu versehenden Stirnkanten des Filtersternes 4 aufgelegt werden. Ihren Zweck, das Eindringen flüssigen Spritzgußmaterials zu vermeiden, erfüllt die Folie auch in dieser Form.

Einen folienumhüllten Filterstern 4 mit einer in der linken Hälfte des Spritzgießwerkzeuges nach Fig. 5 geformten oberen Endscheibe zeigt Fig. 6. Die zweite Endscheibe wird in der rechten Hälfte des Spritzgießwerkzeuges in Fig. 5 angeformt.

## Patentansprüche

1. Verfahren zur Herstellung eines aus einem ersten und einem zweiten Material bestehenden Verbundkörpers, bei dem
- ein Festkörper (4) aus einem ersten der beiden Materialien in den Formhohlraum (3) eines Spritzgießwerkzeuges (1, 2) eingelegt wird,
- das zweite Material als Schmelze in einen Teilbereich des Formhohlraumes (3) eingebracht wird, wobei ein von beiden Materialien unausgefüllter Freiraum innerhalb des Formhohlraumes (3) verbleibt,
- die eingebrachte Schmelze zumindest einen Teilbereich des Festkörpers (4) kontaktiert,
**gekennzeichnet durch die Merkmale**
- in den nicht von den beiden Materialien ausgefüllten Formhohlraum (3) wird ein unter Druck stehendes Gas ein" gegeben,
- ein Oberflächenteilbereich der sich in dem Formhohlraum (3) befindlichen Schmelze steht ausschließlich mit dem eingebrachten Gas in direktem Kontakt,
- das Einbringen der Schmelze und des unter Druck stehenden Gases ist zeitlich derart aufeinander abgestimmt, daß das zweite als Schmelze in den Formhohlraum (3) einzubringende Material ohne Gegendruck des unter Druck einzuleitenden Gases eingebracht wird und unter dem Druck des eingeleiteten Gases eine vordefinierte bestimmte Form erhält.

2. Verfahren nach Anspruch 1,
**dadurch gekennzeichnet,**
daß das zweite Material ein Kunststoff ist.

3. Verfahren nach Anspruch 1 oder 2,
**dadurch gekennzeichnet**,
daß der in den Formhohlraum (3) eingelegte Festkörper (4) ein Filtermaterial ist.

4. Verfahren nach Anspruch 3,
**dadurch gekennzeichnet**,
daß das Filtermaterial in der Form eines radial durchströmbaren Ringfiltersternes (4) vorliegt und das zweite Material diesen Ringfilterstern jeweils stirnseitig als Endscheibe (12, 14) ring- oder scheibenförmig dicht abdeckt.

5. Verfahren nach einem der vorhergehenden Ansprüche,
**dadurch gekennzeichnet**,
daß der Festkörper (4) zumindest gegenüber demjenigen Bereich des Formhohlraumes (3), in den Schmelze als zweites Material eindringen kann, durch eine unter dem zweiten Material aufschmelzende Folie (11) abgedeckt ist.

6. Verfahren nach Anspruch 5,
**dadurch gekennzeichnet**,
daß die Folie (11) aus einem elastischen Material besteht.

7. Verfahren nach einem der vorhergehenden Ansprüche,
**dadurch gekennzeichnet**,
daß ein als Filterstern (4) ausgebildeter, aus erstem Material bestehender Festkörper vollständig mit einer unter dem geschmolzenen zweiten Material aufschmelzbaren Folie (11) überzogen ist mit Ausnahme des in dem zentralen Innenraum liegenden Oberflächenbereiches des Filtersternes (4).

8. Verfahren nach einem der Ansprüche 5 bis 7,
**dadurch gekennzeichnet,**
daß das Gas eine Temperatur aufweist, durch die das Material der Folie (11) plastisch verformbar wird.

9. Verfahren nach einem der vorhergehenden Ansprüche,
**dadurch gekennzeichnet,**
daß das zweite Material in dem Formhohlraum (3) des Spritzgießwerkzeuges (1, 2) zu einem Hohlkörper geformt wird durch Anwendung des an sich bekannten Gasinnendruck-Spritzgießverfahrens.

10. Verfahren nach Anspruch 9,
**dadurch gekennzeichnet,**
daß der Hohlkörper mehrwandig ausgebildet wird.

11. Verfahren nach einem der Ansprüche 3, 4, 9 oder 10,
**dadurch gekennzeichnet**,
daß das zweite Material zumindest Teilbereiche eines den Filterstern (4) umschließenden Filtergehäuses (13) bildet.

## Claims

1. Process for producing a composite body consisting of a first and a second material, in which a fixed body (4) made of a first of the two materials is inserted into the die cavity (3) of an injection moulding tool (1, 2),
the second material is introduced into a partial region of the die cavity (3) as molten material, wherein a space unfilled by the two materials remains inside the die cavity (3),
the molten material introduced contacts at least one partial region of the fixed body,
characterised by the features
- in the die cavity (3) not filled by the two materials a gas under pressure is fed in,
- one surface partial region of the molten material located in the die cavity (3) is exclusively in direct contact with the introduced gas,
- the introduction of the molten material and the gas under pressure is synchronised in such a way that the second material, which is to be introduced into the die cavity (3) as molten material, is introduced without counter pressure of the gas to be conveyed in under pressure and under the pressure of the conveyed in gas acquires a fixed pre-defined form.

2. Method according to claim 1, characterised in that the second material is a plastics material.

3. Method according to claim 1 or 2, characterised in that the fixed body (4) inserted in the die cavity (3) is a filter material.

4. Method according to claim 3, characterised in that the filter material is present in the form of a radially permeable annular filter star (4) and the second material impermeably covers this annular filter star in each case facially as an end plate (12, 14), in the shape of a ring or a disc.

5. Method according to one of the previous claims, characterised in that the fixed body (4) is covered, at least against that region of the die cavity (3) into which molten material can penetrate as a second material, by a foil (11) fusing on underneath the second material.

6. Method according to claim 5, characterised in that the foil (11) consists of an elastic material.

7. Method according to one of the previous claims, characterised in that a fixed body, constructed as a filter star (4) and consisting of a first material, is covered completely by a foil (11) which can be fused on underneath the molten second material, with the exception of the surface region of the filter star (4) located in the central interior.

8. Method according to one of claims 5 to 7, characterised in that the gas has a temperature by which the material of the foil (11) becomes plastically deformable.

9. Method according to one of the previous claims, characterised in that the second material in the die cavity (3) of the injection moulding tool (1, 2) is moulded into a hollow body by application of the gas internal pressure injection moulding method known per se.

10. Method according to claim 9, characterised in that the hollow body is constructed with several walls.

11. Method according to one of claims 3, 4, 9 or 10, characterised in that the second material forms at least partial regions of a filter housing (13) enclosing the filter star (4).

## Revendications

1. Procédé de fabrication d'un corps composite constitué d'une première et d'une deuxième matières, dans lequel
- un corps solide (4) constitué d'une première des deux matières est placé dans la cavité (3) d'un moule à injection (1, 2),
- la deuxième matière est introduite à l'état fondu dans une partie de la cavité de moule (3), un espace libre non rempli par les deux matières restant alors à l'intérieur de la cavité de moule (3),
- la matière fondue introduite vient en contact avec au moins une partie du corps solide (4),
caractérisé par les caractéristiques suivantes :
- dans la cavité de moule (3) non remplie par les deux matières est introduit un gaz sous pression,
- une partie de surface de la matière fondue qui se trouve dans la cavité de moule (3) est en contact direct uniquement avec le gaz introduit,
- l'introduction de la matière fondue et celle du gaz sous pression sont accordées entre elles temporellement de façon telle que la deuxième matière, introduite à l'état fondu dans la cavité de moule (3), soit introduite sans contre-pression du gaz introduit sous pression et prenne sous la pression du gaz introduit une forme déterminée prédéfinie.

2. Procédé selon la revendication 1, caractérisé par le fait que la deuxième matière est un plastique.

3. Procédé selon l'une des revendications 1 et 2, caractérisé par le fait que le corps solide (4) placé dans la cavité de moule (3) est une matière filtrante.

4. Procédé selon la revendication 3, caractérisé par le fait que la matière filtrante se présente sous la forme d'une étoile filtrante annulaire (4) pouvant être traversée radialement, et la deuxième matière recouvre frontalement de manière étanche, annulairement ou en forme de disque, sous forme de disque d'extrémité (12, 14), cette étoile filtrante annulaire.

5. Procédé selon l'une des revendications précédentes, caractérisé par le fait que le corps solide (4), au moins en face de la zone de la cavité de moule (3) dans laquelle de la matière fondue peut pénétrer comme deuxième matière, est recouvert par une feuille (Il) qui fond sous la deuxième matière.

6. Procédé selon la revendication 5, caractérisé par le fait que la feuille (11) est constituée d'une matière élastique.

7. Procédé selon l'une des revendications précédentes, caractérisé par le fait qu'un corps solide constitué de la première matière et formé d'une étoile filtrante (4) est entièrement recouvert d'une feuille (11) pouvant fondre sous la deuxième matière fondue, à l'exception de la partie de surface de l'étoile filtrante (4) située dans l'espace intérieur central.

8. Procédé selon l'une des revendications 5 à 7, caractérisé par le fait que le gaz a une température qui peut déformer plastiquement la matière de la feuille (11).

9. Procédé selon l'une des revendications précédentes, caractérisé par le fait que la deuxième matière est, dans la cavité (3) du moule à injection (1, 2), transformée en un corps creux par emploi du procédé de moulage par injection à pression intérieure de gaz connu en soi.

10. Procédé selon la revendication 9, caractérisé par le fait que le corps creux est formé avec plusieurs parois.

11. Procédé selon l'une des revendications 3, 4, 9 et 10, caractérisé par le fait que la deuxième matière forme au moins des parties d'un boîtier de filtre (13) qui enferme l'étoile filtrante (4).
